# EUROPEAN PATENT APPLICATION

(11) **EP 4 748 489 A1**
(43) Date of publication of application: **27.05.2026**
(21) Application number: 24215433.4
(22) Date of filing: 26.11.2024
(51) Int. Cl.: B01J 13/14, B01J 13/22, B01J 20/04, B01J 20/06, B01J 20/28, B01J 20/32, H01F 1/00

(54) **FUNCTIONALIZED MAGNETIC NANOPARTICLES**

(71) Applicant: The Cultivated B. GmbH, 69124 Heidelberg (DE)
(72) Inventor: Weber, Konrad, 69124 Heidelberg (DE); Ponader, Marco, 69124 Heidelberg (DE)
(74) Representative: Ullrich & Naumann PartG mbB

(57) **Abstract**

The present invention relates to an immobilized metal-functionalized magnetic nanoparticle (IM-MNP) comprising a ferrite core and a coating comprising an aminosilane moiety, a chelating moiety and a divalent transition metal cation. The present invention further relates to a composition of IM-MNPs, a method of manufacturing IM-MNPs, use of a composition of IM-MNPs for purifying a target protein, and a method of purifying a target protein from a biological sample.

## Description

### FIELD OF THE INVENTION

The invention relates to functionalized magnetic nanoparticles for purification of biomolecules. Furthermore, the inventions relates to an improved protein purification process based on the selective precipitation of protein impurities.

### BACKGROUND OF THE INVENTION

Today, protein purification is a crucial step in the production of recombinant proteins widely used in biotechnology, pharmaceuticals, and research. A commonly employed method for purifying these proteins is immobilized metal affinity chromatography (IMAC). This technique typically involves binding recombinant His-tagged proteins to transition metal ions, such as nickel or cobalt ions, which are immobilized on agarose-based beads either packed into chromatography columns or used in batch mode. While highly effective for isolation of recombinant proteins from complex mixtures, this process generally requires expensive equipment and consumables, including complex chromatography setups, or necessitates subjecting the fragile beads to prolonged centrifugation or filtration steps, thereby rendering the process less suitable for applications beyond laboratory-scale research.

Alternative methods have sought to simplify IMAC by using magnetic beads formed by embedding nickel-coated agarose with magnetite, enabling protein purification without the need for complex chromatography setups or prolonged centrifugation and filtration steps. This approach reduces costs related to equipment and consumables while increasing purification speed. However, despite these advantages, commercially available magnetic bead kits (such as His Mag Sepharose Ni from Cytiva) are prohibitively expensive due to their complex manufacturing process and limited reusability, restricting their use to small-scale research applications rather than large-scale production.

Oberacker et al. (2019, PLOS Biology 17(1): e3000107) relates the manufacturing of functionalized magnetic beads, detailing the synthesis of ferrite-core magnetic particles coated with either silica or methacrylic acid. While these particles are effective for high-throughput purification of plasmids, genomic DNA, RNA, and total nucleic acids from various sources, they are not suitable for protein purification.

Protein extraction from plant matrices presents an additional set of challenges. Plant tissues contain various disruptive compounds, such as plant debris, DNA, pH-modifying substances, and enzymes like proteases and nucleases, of which, some of them degrade the target proteins. To mitigate these effects, protein extraction often requires low temperatures, protease inhibitors, and radical scavengers. Even with these precautions, the extraction process can be labor-intensive and time-consuming, with extended precipitation steps and multiple purification stages necessary to obtain a semi-pure product.

In summary, while IMAC and other methods offer viable routes for protein purification, the current techniques are limited by cost, scalability, and complexity. Improved methods are needed to facilitate efficient, scalable protein purification from challenging matrices such as plant tissues, especially at an industrial scale where cost-effectiveness and process simplification are paramount.

### SUMMARY OF THE INVENTION

The present invention is, *inter alia,* based on the surprising finding that ferrite nanoparticles can be directly functionalized using aminosilane. In contrast to the state of the art, these particles do not require dispersion of ferrites in a matrix of agarose or another bead-forming material. Instead, conjugation is achieved via a direct binding to aminosilane to the ferrite, which is further functionalized with a chelating moiety bound to a divalent transition metal cation. Thereby, ferrimagnetic nanoparticles with surface-exposed protein binding divalent transition metal cations are obtained enabling efficient purification of proteins. Thus, the method of the invention allows for much smaller particle sizes and results in a higher density of magnetic material.

Thus, according to a first aspect, the invention relates to an immobilized metal-functionalized magnetic nanoparticle (IM-MNP) comprising a ferrite core and a coating comprising an aminosilane moiety, a chelating moiety and a divalent transition metal cation.

The IM-MNP is generally used in form of a composition of a large number of particles. Therefore in a second aspect, the invention relates to a composition of IM-MNPs, wherein IM-MNPs are defined according to the first aspect, and wherein the cores of the IM-MNPs have an average diameter of in the range of 1 to 40 nm. The average small particle sizes lead to higher density of magnetic material.

To obtain the IM-MNP, the inventors have defined a new process of nanoparticle functionalization, in particular by binding aminosilane moieties directly to the ferrite cores. These particles are readily functionalized through reaction with chelating agent anhydrides, followed by incubation with divalent transition metal ions. Accordingly, the present invention provides a fast and cost-effective process for preparing functionalized magnetic nanoparticles. Thus, in a third aspect, the invention relates to a method of manufacturing IM-MNPs, comprising the steps of:
a) providing ferrite particles, wherein the ferrite is preferably magnetite;
b) adding an aminosilane to the ferrite particles and mixing, thereby forming aminosilane-coated ferrite particles;
c) separating a pellet formed by the aminosilane-coated ferrite particles from the reaction mixture and washing the pellet,
d) adding a chelating agent anhydride to the pellet and mixing, thereby forming chelating aminosilane-coated ferrite particles;
e) separating a pellet formed by the chelating aminosilane-coated ferrite particles from the reaction mixture and washing the pellet; and
f) incubating the chelating aminosilane-coated ferrite particles with a divalent transition metal cation; removing a pellet formed by the divalent transition metal cation coated ferrite particle from the reaction mixture and washing the pellet.

Due to their high specificity for His-tagged proteins and reduced non-specific binding compared to conventional agarose-based beads, compositions of the IM-MNPs of the inventions are employed in protein purification. Furthermore, the increased thermal and chemical resistance of the particles allows for more stringent cleaning, thereby enhancing their reusability, increasing cost-effectiveness and reducing waste. In a fourth aspect, the invention relates to the use of a composition of IM-MNPs according to the second aspect for purifying a target protein from a mixture comprising the target protein, wherein the target protein comprises a His-tag.

Moreover, the inventors have surprisingly found that a target protein can be purified from a complex mixture containing protein contaminants by precipitating the protein contaminants through contacting the mixture with a polyethylene glycol (PEG) solution at a pH close to the pl of the target protein, while the target protein remains in solution under the employed conditions, thereby offering an improved purification process.

Therefore, in a fifth aspect, the invention relates to a method of purifying a target protein from a biological sample comprising the steps of:
a) providing the biological sample comprising the target protein; and/or;
b) contacting the biological sample with an extraction solution comprising polyethylene glycol (PEG), thereby forming a first mixture, wherein the absolute difference between the pH of the first mixture and the pl of the target protein is at most 2, to cause protein precipitation, thereby forming a suspension; and/or
c) centrifuging the suspension, thereby forming a pellet comprising precipitated proteins and a supernatant comprising the target protein;
d) separating the pellet from the supernatant comprising the target protein and optionally filtering the supernatant.

The IM-MNPs of the present invention are compatible with a wide range of additives used in protein purification. Due to their high density and small size compared to micron-sized agarose-based beads, the IM-MNPs according to the present invention, demonstrate improved homogeneity in mixing as well as an enhanced settling rate under centrifugation or in a magnetic field. These properties are particularly important when working with more viscous solutions, such as the PEG-containing supernatant provided by the method described in the fifth aspect.

Therefore, according to one embodiment of the fifth aspect, the target protein contains a His-Tag and wherein the method further comprises the steps of:
e) contacting the supernatant comprising the target protein with a binding buffer and a composition of IM-MNP according to the second aspect under first conditions under which the target protein binds to the IM-MNP, thereby forming a second mixture;
f) separating the IM-MNP from the second mixture, preferably by applying a magnetic field;

### FIGURES

- **Fig.** 1: shows a scheme illustrating an exemplary synthesis of IM-MNPs according to the invention.
- Fig. 2: shows a SDS-PAGE and western blot analyses of samples taken throughout the purification of His-tagged green fluorescent protein (GFP). Molecular weights are indicated in kDa.

### DETAILED DESCRIPTION OF THE INVENTION

In order to provide a clear and consistent understanding of the specification and claims, and the scope to be given to such terms, the following definitions are provided.

### Definitions

The transitional term "**comprising**", which is synonymous with "**including**" "**containing**", or "**characterized by**", is inclusive or open-ended and does not exclude additional, unrecited elements or method steps. The transitional phrase "**consisting of**" excludes any element, step, or ingredient not specified in the claim, except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "**consisting essentially of**" limits the scope of a claim to the specified materials or steps "and those that do not materially affect the basic and novel characteristic(s)" of the claimed invention. A "**consisting essentially of**" claim occupies a middle ground between closed claims that are written in a "consisting of" format and fully open claims that are drafted in a "comprising" format.

A "**protein**" as used herein may contain one or more polypeptide chains. Proteins with more than one polypeptide chain are often expressed as one polypeptide chain from one gene and cleaved post translationally. Thus, the terms "**polypeptide**" and "**protein**" are used interchangeably. The polypeptides and proteins as used herein include chemically synthesized proteins as well as naturally synthesized proteins which are encoded by genes. The polypeptides or proteins may be obtained from a natural source or produced in cell culture or transgenic animals or transgenic plants as recombinant proteins.

The term "**recombinant**" when used in reference to a cell, nucleic acid, protein or vector, indicates that the cell, nucleic acid, protein or vector has been modified by the introduction of a heterologous nucleic acid or protein or the alteration of a native nucleic acid or protein, or that the cell is derived from a cell so modified. Thus, for example, recombinant cells express genes that are not found within the native (non-recombinant) form of the cell, or express native genes at different levels or under different conditions than found in nature.

The terms "**His-tag**" or "**polyhistidine-tag**" as used herein refers to a short peptide sequence consisting of multiple consecutive histidine residues, typically six to ten, that may be fused to a "**protein of interest**" or "**target protein**" to facilitate its purification and/or identification. His-tags are designed to bind specifically to metal ions, such as, for example, nickel or cobalt, immobilized on a surface, such as, for example, the surface of a bead or particle, enabling the selective capture of the tagged target protein from complex mixtures or biological samples.

The term "**polyethylene glycol**" or "**PEG**" as used herein refers to polymers comprising repeating ethylene oxide units, typically represented by the formula H-(OCH₂CH₂)ₙ-OH, wherein n denotes the number of repeating ethylene oxide units, determining the average molecular weight and physical properties of the polymer. PEG variants may be classified and named based on their average molecular weight, as indicated by the numeric value following "PEG" (e.g., PEG-400, PEG-3350), with the numeric value approximately corresponding to the average molecular weight of the polymer in g/mol. For instance, PEG-400 has an average molecular weight of approximately 400 g/mol, while PEG-3350 has an average molecular weight of approximately 3350 g/mol. As a result of polymerization, PEGs exhibit polydispersity, with the polymers containing molecules of varying molecular weights, and the stated molecular weight representing an average value.

The term "**aminosilane**" as used herein refers to a class of organosilicon compounds that contain at least one amine functional group, for example an aminoalkyl group, and one or more alkoxy groups bound to silicon. These compounds serve as coupling agents or surface modifiers because they can form covalent bonds with both inorganic substrates through the hydrolyzable alkoxy groups and organic materials via the reactive amine functional groups. Upon hydrolysis, aminosilanes generate silanol groups, which are capable of interacting with inorganic substrates or undergoing condensation reactions with adjacent silanol groups to form siloxane bonds. The hydrolyzed products of aminosilanes are referred to herein as "**aminosilane moieties**".

The term "**linker**" or "**spacer**" as used herein refers to a molecular moiety that connects two distinct functional units within a larger molecule or system, such as the surface of a particle and a chelating moiety, wherein the linker is designed to provide spatial separation between these entities without interfering with their respective functions.

The term "**chelating agents**" as used herein refers to chemical compounds capable of forming multiple bonds with a single metal ion, resulting in the formation of a stable complex. These compounds possess multiple donor atoms, such as oxygen, nitrogen, or sulfur, which can coordinate with the metal ion, thereby forming a ring-like structure around the ion, resulting in a "**chelate complex**". This bonding process is referred to as "**chelation**". In a chelate complex, the ligand is also referred to as a "**chelating ligand**" or simply a "**chelate**".

The term "**immobilized metal**" as used herein refers to metal ions that are bound to a solid support through chelating agents or other immobilization mechanisms, thereby rendering the metal ions stationary. This immobilization facilitates selective interaction with target molecules possessing affinity for the metal ions. In the context of "**immobilized metal affinity chromatography**" (IMAC), the immobilized metal ions serve as part of the stationary phase that specifically binds to molecules containing particular functional groups, such as, for example, histidine residues in proteins, enabling their separation, purification, or analysis.

The term "**nanoparticle**" as used herein refers to a particle with at least one dimension in the nanoscale range, typically between 1 nm and 100 nm, and can be composed of various materials, including metals, metal oxides, polymers, and biomolecules.

The term "**core**" as used herein refers to the central part or innermost region of a nanoparticle, which serves as a foundation for additional components or coatings.

The term "**coating**" or "**shell**" as used herein refers to one or more layers of material applied to a surface to modify its properties, such as enhancing stability or improving functionality.

The term "**contacting**" as used herein means that the components are brought into the same composition to allow the components to contact and optionally react with each other.

The term "**biological sample**" as used herein refers to any material derived from a biological source, including tissues, cells, bodily fluids, or other biological substances, which may contain biomolecules such as nucleic acids, proteins, lipids, or metabolites.

### Immobilized metal-functionalized magnetic nanoparticles

According to a first aspect, the invention relates to an immobilized metal-functionalized magnetic nanoparticle (IM-MNP) comprising a ferrite core and a coating comprising an aminosilane moiety, a chelating moiety and a divalent transition metal cation.

Thereby, the ferrite core of the IM-MNP provides a particularly high mechanical stability to the particle, while the coating ensures chemical stability and enables functionalization of the particle for various applications. Within the coating, the aminosilane moiety serves as a linker between the ferrite core's surface and the chelating moiety, which binds the divalent transition metal cation.

The selection of the aminosilane moiety directly affects the degree of surface coverage and affects the spatial orientation and accessibility of the chelating moiety. The choice of aminosilane moiety as well as the choice of the chelating moiety may therefore influence the efficiency of surface functionalization and the effectiveness of the chelating moiety in binding to divalent transition metal cations and to different target compounds.

According to one embodiment, the aminosilane moiety is selected from is selected from 3-Aminopropylsilane, 4-Aminobutylsilane, N-(2-Aminoethyl)-3-aminopropylsilane, N-6-Aminohexylaminomethylsilan, 3-[2-(2-Aminoethylamino)ethylamino]propylsilane. In a preferred embodiment, the aminosilane moiety is 3-Aminopropylsilane.

According to one embodiment, the chelating moiety is selected from ethylenediaminetetraacetic acid (EDTA), Nitrilotriacetic Acid (NTA), Ethylenediamine-N,N'-diacetic Acid (EDDA), Diethylenetriaminepentaacetic Acid (DTPA), Cyclohexane Diamine Tetraacetic Acid (CDTA). In a preferred embodiment, the chelating moiety is EDTA.

This ensures a particularly high degree of surface coverage and accessibility of the chelating moiety, enabling high binding capacity for divalent transition metal cations, thereby improving the efficiency of processes such as protein purification, among other applications.

The connection between the aminosilane moiety and the chelating moiety influences chemical stability and steric accessibility of chelating moiety of the IM-MNPs. The aminosilane moiety and the chelating moiety may be connected by covalent bonds, such as amide, urea, thiourea, carbamate, or imine linkages. According to one embodiment, the aminosilane moiety and the chelating moiety are connected by an amide group. Thereby, the resulting structure exhibits enhanced stability under a range of chemical conditions, reducing the likelihood of premature degradation or detachment of components of the coating from the ferrite core.

The chelating moieties according to the invention are capable of binding different divalent transition metal cations. Thus, the IM-MNP according to the invention may comprise different divalent transition metal cations. These different cations can influence the binding characteristics of the chelating moieties, such as affinity, selectivity, and capacity for specific target proteins or biomolecules. This allows for customized purification protocols tailored to specific proteins, enhancing the efficiency and specificity of the purification process. According to one embodiment, the divalent transition metal cation is selected from Ni²⁺, Co²⁺, Cu²⁺ and Zn²⁺. According to a preferred embodiment, the divalent transition metal cation is Ni²⁺. Thereby, the IM-MNP provides enhanced affinity and selectivity for histidine-tagged proteins, resulting in improved purification efficiency with higher purity and yield in protein isolation processes.

According to the invention, different ferrites may be used as the core of the particles. The ferrite used affects the size, magnetic properties, colloidal stability, and binding efficiency of the resulting particles. According to one embodiment, the ferrite is selected from magnetite (Fe₃O₄), Cobalt Ferrite (CoFe₂O₄), Nickel Ferrite (NiFe₂O₄), Manganese Ferrite (MnFe₂O4), Lithium Ferrite (LiFesOs), Barium Ferrite (BaFe₁₂O₁₉), and Strontium Ferrite (SrFe₁₂O₁₉). In a preferred embodiment, the ferrite is Fe₃O₄. Thereby, the ferrite core provides strong magnetization, facilitating efficient magnetic separation, while simultaneously allowing for small particle size and ensuring optimal particle dispersion and stability, which is particularly beneficial in protein purification processes.

### Composition of IM-MNPs

According to a second aspect, the invention relates to a composition of IM-MNPs, wherein IM-MNPs are defined according to the first aspect, and wherein the cores of the IM-MNPs have an average diameter of in the range of 1 to 40 nm. The size may be, for example, determined by Scanning Electron Microscopy (SEM). SEM is an imaging technique used to observe the surface structure and morphology of samples with high resolution and depth of field. It uses a focused beam of electrons rather than light to form an image. The cores of the IM-MNPs may, for example, have an average diameter of 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, or 40 nm. According to a preferred embodiment, the cores of the IM-MNPs have an average diameter of in the range of 5 to 20 nm. Particularly preferred, the cores of the IM-MNPs have an average diameter of in the range of 10 to 15 nm.

Thereby, the cores of the IM-MNPs provide a particularly high specific surface area well-suited for functionalization with a high number of chelating ligands, which effectively bind divalent transition metal cations.

According to one embodiment, the concentration of the divalent transition metal cation is at least 400 µg/ml. The concentration may be, for example determined by Inductively Coupled Plasma Mass Spectrometry (ICP-MS). ICP-MS is an analytical technique used to detect and quantify trace elements and isotopes in various samples with high precision and sensitivity. In a preferred embodiment, the concentration of the divalent transition metal cation is at least 600 µg/ml. In a more preferred embodiment, the concentration of the divalent transition metal cation is at least 700 µg/ml. Particularly preferred is a divalent transition metal cation concentration of at least 800 µg/ml.

Thereby, the composition of IM-MNPs provides a high binding capacity for His-tagged proteins.

### Method for manufacturing IM-MNPs

According to a third aspect, the invention relates to a method of manufacturing IM-MNPs, comprising the steps of
a) providing ferrite particles, wherein the ferrite is preferably magnetite;
b) adding an aminosilane to the ferrite particles and mixing, thereby forming aminosilane-coated ferrite particles;
c) separating a pellet formed by the aminosilane-coated ferrite particles from the reaction mixture and washing the pellet,
d) adding a chelating agent anhydride to the pellet and mixing, thereby forming chelating aminosilane-coated ferrite particles;
e) separating a pellet formed by the chelating aminosilane-coated ferrite particles from the reaction mixture and washing the pellet; and
f) incubating the chelating aminosilane-coated ferrite particles with a divalent transition metal cation; removing a pellet formed by the divalent transition metal cation coated ferrite particle from the reaction mixture and washing the pellet.

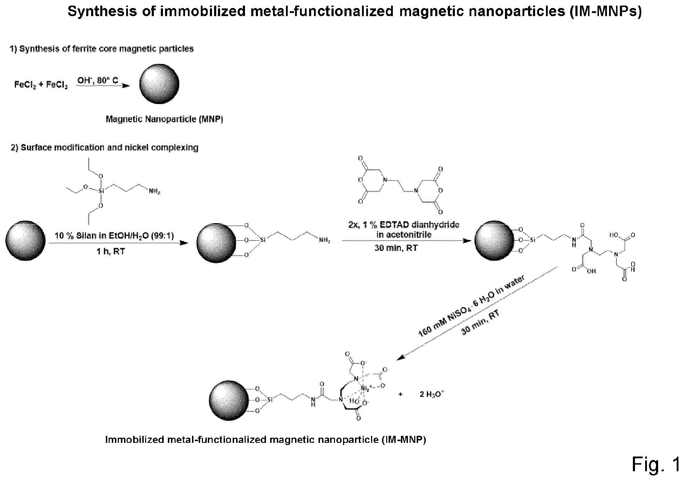

A scheme illustrating an exemplary synthesis of IM-MNPs is shown in Fig. 1.

Aminosilanes that can be used according to the invention include organosilicon compounds that contain at least one amine functional group and one or more hydrolyzable alkoxy groups bound to silicon. The selection of alkoxy groups regulates the hydrolysis rate of the aminosilane, while the choice of aminoalkyl dictates the length of the functional group introduced onto the surface by silanization, thereby influencing the modified ferrite particle's surface properties. According to one embodiment, in step b), the aminosilane is selected from (3-Aminopropyl)triethoxysilane (APTES), (3-Aminopropyl)trimethoxysilane (APTMS), (3-Aminopropyl)methyldiethoxysilane (APDMES), N-(2-Aminoethyl)-3-aminopropyltrimethoxysilane (AEAPTMS), (3-Aminopropyl)triisopropoxysilane (APTIPES), and (3-Aminopropyl)triacetoxysilane (APTAS) 3-aminopropyltriethoxysilane (APS), 4-Aminobutyltriethoxysilane, N-(2-aminoethyl)-3-aminopropyltrimethoxysilane (EDA), and (3-trimethoxysilylpropyl) diethylenetriamine (DETA), N-(6-Aminohexyl)aminomethyltriethoxysilane. In a preferred embodiment, the aminosilane is APTES. In a more preferred embodiment, the aminosilane, in particular APTES is added to the provided ferrite particles as an ethanolic solution. This leads to an appropriate solubility of the aminosilanes while preventing premature hydrolysis and condensation, thereby allowing for efficient silanization of the ferrite particles.

The weight ratio of ferrite particles to the aminosilane is important because it ensures proper surface coverage, improving adhesion, stability, and particle dispersion. An optimal ratio prevents incomplete coating or particle aggregation and helps maintain the magnetic properties of ferrite particles. The weight ratio of ferrite particles to the aminosilane may be, for example, 2:1, 3:1, 4:1, 5:1, 6:1, 7:1, 8:1, 9:1, or 10:1. According to one embodiment, in step b), the weight ratio of ferrite particles to the aminosilane is in the range of 2:1 to 10:1. In a preferred embodiment, the weight ratio of ferrite particles to the aminosilane is in the range of 3:1 to 5:1.

Following addition of the aminosilane to the ferrite particles, the mixture may be stirred at a temperature of between 10 and 30 °C. For example, the ferrite particles may be incubated with the aminosilane at a temperature of 10°C, 12.5°C, 15°C, 17.5°C, 20°C, 22.5°C, 25°C, 27.5°C, 30 °C.

Following addition of the aminosilane to the ferrite particles, mixture may be stirred for a duration of at most 8 h. For example, the ferrite particles may be incubated with the aminosilane for a duration of 0.5 h, 1.0 h, 1.5 h, 2.0 h, 2.5 h, 3.0 h, 3.5 h, 4.0 h, 4.5 h, 5.0 h, 5.5 h, 6.0 h, 6.5 h, 7.0 h, 7.5 h, or 8.0 h.

According to one embodiment, in step b), the mixture is stirred at a temperature of 15 to 25 °C for a duration of at most 8 h. According to a preferred embodiment, the mixture is stirred at a temperature of 15 to 25 °C for a duration of at most 4 h. Particularly preferred, the mixture is stirred at a temperature of 15 to 25 °C for a duration of 30 min to 2 h.

According to one embodiment, in step c), the pellet is separated magnetically from the reaction mixture. This method avoids the labor- and time-intensive centrifugation process, which typically requires costly equipment, and instead forms the pellet within seconds by applying a magnetic field, further simplifying the manufacturing process and facilitating automation and scalability.

The magnetic field, provided by a permanent magnet or electromagnet, may be applied near the container holding the reaction mixture. The magnet may be for example Neodym Magnet Quader N52 (80x80x20mm 400 kg nickel).The particles, being magnetized, are attracted to the side or bottom of the container closest to the magnet. Once the particles have aggregated near the magnet, the remaining liquid can be carefully removed or decanted, which removes unbound materials while leaving the magnetic particles immobilized. Alternatively, the magnet, which may be coated to prevent direct contact with the reagents, can be dipped directly into the reaction mixture, attracting the magnetic particles to its surface. Once the particles are attached to the magnet, it is lifted from the solution, allowing excess liquid to drain off.

For higher purity, the IM-MNPs can be washed by adding fresh solvent to the pellet, agitating the mixture to resuspend the IM-MNPs, and then separating the IM-MNPs from the solvent once again. The volume of the solvent for washing may be in the range of 1 to 20 mL per mL of particles. A volume of less than 1 mL would dilute the particles too less, decreasing the efficiency of the washing step. For example, the volume of the solvent for washing may be 1 mL, 2 mL, 3 mL, 4 mL, 5 mL, 6 mL, 7 mL, 8 mL, 9 mL, 10 mL, 11 mL, 12 mL, 13 mL, 14 mL, 15 mL, 16 mL, 17 mL, 18 mL, 19 mL, or 20 mL per mL of particles.

According to one embodiment, in step c), the pellet is washed at least two times. The pellet may be washed at least three times, at least four times or at least five times. Repeated washing effectively removes impurities. Various solvents may be used to remove different impurities. According to one embodiment, in step c),the pellet is washed with ethanol and/or with acetonitrile.

As a result, the process achieves improved separation efficiency, enhanced pellet purification, and better removal of impurities, leading to purer aminosilane-coated ferrite particles.

To further functionalize the aminosilane-coated ferrite particles, in step d), said particles are subsequently contacted with a chelating agent anhydride under suitable reaction conditions.

According to one embodiment, in step d), the pellet is resuspended in an organic, polar aprotic solvent, preferably selected from acetonitrile, acetone, dimethyl sulfoxide (DMSO), and tetrahydrofuran (THF). According to one embodiment, the solvent is acetonitrile. Acetonitrile is an ideal solvent for reactions involving anhydrides due to its polar aprotic nature and its low nucleophilicity. In acetonitrile, the beads pellet quickly and do not form clumps. The volume of acetonitrile per mL of particles may be in the range of 1 to 10 mL per mL particles. A volume of more than 10 mL would dilute the particles too much for the subsequent reaction step, increasing reaction times and producing excess waste due to inefficient use of reagents. For example, 1 mL, 2 mL, 3 mL, 4 mL, 5 mL, 6 mL, 7 mL, 8 mL, 9 mL, or 10 mL per mL of particles. In a preferred embodiment, the pellet is resuspended with a volume of 3 to 5 mL per mL particles.

Chelating agent anhydrides that can be used according to the invention include those that, following reaction with an amine functional group and subsequent anhydride hydrolysis, are capable of providing at least two donor atoms for the formation of complexes with metal ions. According to one embodiment, in step d), the chelating agent anhydride is selected from EDTA dianhydride, NTA anhydride, EDDA anhydride, DTPA anhydride, CDTA anhydride. According to a preferred embodiment, the chelating agent anhydride is EDTA dianhydride.

According to one embodiment, in step d), the chelating agent anhydride is added to the particles in an amount of in the range of 16 to 96 mg per mL particles. Below 16 mg per ml particles, no sufficient coating of the aminosilane particles with chelating agent will be achieved. Above a concentration of 96 mg it is believed that the high number of chelating agent anhydride molecules may even hinder the conjugation and lead to a coverage with chelating significantly below maximum. The chelating agent anhydride may be added to the particles in a ratio of, for example, 16 mg, 24 mg, 32 mg, 40 mg, 48 mg, 56 mg, 64 mg, 72 mg, 80 mg, 88 mg, or 96 mg per milliliter of particles. Optimal results are obtained with 40 mg chelating agent anhydride per milliliter of particles. According to a preferred embodiment, the chelating agent anhydride is added to the particles in a ratio of in the range of 32 to 48 mg per mL particles.

The aminosilane-coated ferrite particles may be incubated with the chelating agent anhydride at a temperature of between 5 and 40 °C. For example, the aminosilane-coated ferrite particles may be incubated with the divalent transition metal cation at a temperature of 5°C, 7.5°C, 10°C, 12.5°C, 15°C, 17.5°C, 20°C, 22.5°C, 25°C, 27.5°C, 30°C, 32.5°C, 35°C, 37.5°C, or 40°C.

The aminosilane-coated ferrite particles may be incubated with chelating agent anhydride for a duration of at most 8h. For example, the aminosilane-coated ferrite particles may be incubated with the divalent transition metal cation for a duration of 0.5 h, 1.0 h, 1.5 h, 2.0 h, 2.5 h, 3.0 h, 3.5 h, 4.0 h, 4.5 h, 5.0 h, 5.5 h, 6.0 h, 6.5 h, 7.0 h, 7.5 h, or 8.0 h.

According to one embodiment, in step d), the mixture is stirred at a temperature of 15 to 25 °C for a duration of at most 8 h. According to a preferred embodiment, the mixture is stirred at a temperature of 15 to 25 °C for a duration of at most 4 h. Particularly preferred, the mixture is stirred at a temperature of 15 to 25 °C for a duration of 30 min to 2 h.

According to one embodiment, in step d), the pellet is removed and EDTA anhydride in acetonitrile is added to the pellet, wherein the ratio of EDTA anhydride to particles is the same as in the first addition and the mixing conditions are the same.

According to one embodiment, in step e)
- the pellet is removed from the supernatant magnetically; and/or
- the pellet is washed at least two times; and/or
- the pellet is washed with acetonitrile.

As a result, the process achieves improved separation efficiency, enhanced pellet purification, and better removal of impurities, leading to purer chelating aminosilane-coated ferrite particles. These particles are subsequently further functionalized as described in step f).

By employing particles capable of chelating different divalent cations, the method can be tailored to adjust the strength and specificity of the formed IM-MNPs with respect to protein binding. For example, divalent cations that promote stronger protein binding, such as Ni²⁺ or Cu²⁺, may be used when high binding capacity is required, facilitating enhanced protein capture. In contrast, incubating the particles with Zn²⁺ or Co²⁺ may be advantageous in applications requiring more selective or more gentle binding, thereby reducing non-specific interactions. According to one embodiment, in step f), the particles are incubated with a solution comprising the divalent transition metal cation, wherein the divalent transition metal cation is selected from Ni²⁺, Co²⁺, Cu²⁺ and Zn²⁺, preferably a Nickel(II) sulphate hexahydrate solution, more preferably an aqueous Nickel(II) sulphate hexahydrate solution.

The chelating aminosilane-coated ferrite particles may be incubated with the divalent transition metal cation at a temperature of between 5 and 40 °C. For example, the chelating aminosilane-coated ferrite particles may be incubated with the divalent transition metal cation at a temperature of 5°C, 7.5°C, 10°C, 12.5°C, 15°C, 17.5°C, 20°C, 22.5°C, 25°C, 27.5°C, 30°C, 32.5°C, 35°C, 37.5°C, or 40°C.

The chelating aminosilane-coated ferrite particles may be incubated with the divalent transition metal cation for a duration of at most 8h. For example, the chelating aminosilane-coated ferrite particles may be incubated with the divalent transition metal cation for a duration of 0.5 h, 1.0 h, 1.5 h, 2.0 h, 2.5 h, 3.0 h, 3.5 h, 4.0 h, 4.5 h, 5.0 h, 5.5 h, 6.0 h, 6.5 h, 7.0 h, 7.5 h, or 8.0 h.

According to one embodiment, in step f), the particles are incubated at a temperature of 15 to 25 °C for a duration of at most 8 h. According to a preferred embodiment the particles are incubated at a temperature of 15 to 25 °C for a duration of at most 4 h. Particularly preferred the particles are incubated at a temperature of 15 to 25 °C for a duration of 30 min to 2 h.

According to one embodiment, in step f), the concentration of the divalent transition metal cation in the solution comprising the divalent transition metal cation is in the range of 5 to 500 mM. The concentration of the divalent transition metal cation may be, for example, 5 mM, 10 mM, 20 mM, 30 mM, 40 mM, 50 mM, 60 mM, 70 mM, 80 mM, 90 mM, 100 mM, 110 mM, 120 mM, 130 mM, 140 mM, 150 mM, 160 mM, 170 mM, 180 mM, 190 mM, 200 mM, 210 mM, 220 mM, 230 mM, 240 mM, 250 mM, 300 mM, 350 mM, 400 mM, 450 mM, or 500 mM. According to a preferred embodiment, the concentration of the divalent transition metal cation is in the range 150 to 170 mM.

According to one embodiment, in step f), the volume of the solution comprising the divalent transition metal cation is between 1 to 10 mL per mL particles. The volume of the solution comprising the divalent transition metal cation may be, for example, 1 mL, 2 mL, 3 mL, 4 mL, 5 mL, 6 mL, 7 mL, 8 mL, 9 mL, or 10 mL per milliliter of particles. In a preferred embodiment, the volume of the solution comprising the divalent transition metal cation is between 3 to 10 mL per mL particles.

### Use of a composition of IM-MNPs

According to a fourth aspect, the invention relates to the use of a composition of IM-MNPs according to the second aspect for purifying a target protein from a mixture comprising the target protein, wherein the target protein comprises a His-tag.

### Method of purifying a target protein

According to a fifth aspect, the invention relates to a method of purifying a target protein from a biological sample comprising the steps of:
a) providing the biological sample comprising the target protein; and/or
b) contacting the target protein with an extraction solution comprising polyethylene glycol (PEG), thereby forming a first mixture, wherein the absolute difference between the pH of the first mixture and the pl of the target protein is at most 2, to cause protein precipitation, thereby forming a suspension; and/or
c) centrifuging the suspension, thereby forming a pellet comprising precipitated proteins and a supernatant comprising the target protein; and/or
d) separating the pellet from the supernatant comprising the target protein.

The inventors have surprisingly found that the method of the present invention is particularly effective in addressing challenges associated with purifying a target protein from plant tissue. Moreover, the method of the invention can also be applied to other types of biological samples. Therefore, according to one embodiment, the biological sample comprising the target protein is selected from bacterial cells, yeast cells, mammalian cells and plant tissues; or lysates thereof. According to a preferred embodiment more preferably wherein the biological sample is a plant tissue.

In conventional PEG precipitation methods, a target protein is isolated by gradually adding PEG to the solution comprising the target protein until a specific concentration is reached, at which the target protein precipitates. Atha et al. describe how polyethylene glycol (PEG) in this method acts as an "inert sponge" at high concentrations, inducing steric exclusion of proteins from the solution. This increases the concentration of dissolved proteins to their solubility limits, leading to precipitation.

Therefore, this process is analogous to the conventional "salting out" of proteins, as detailed by Duong-Ly et al. and Arakawa et al. Conventional PEG precipitation typically requires overnight incubation to ensure complete protein precipitation, followed by centrifugation to pellet the precipitated proteins. The supernatant, containing impurities, is discarded, and the pellet is resuspended in a buffer solution, re-solubilizing and purifying the target protein.

In contrast, the method according to the invention employs reverse PEG precipitation, wherein conditions are selected to precipitate impurities while retaining the target protein in solution. Specifically, parameters such as solution pH, the isoelectric point (pl) of the target protein, PEG variant, and PEG concentration are optimized so that impurities precipitate more readily than the target protein. Without wishing to be bound by theory, the underlying mechanism is thought to involve minimizing destabilizing ionic interactions within the PEG-protein solution system, as suggested by Lee et al. By selecting a pH for the first mixture close to the pl of the target protein, the charge on the target protein is reduced, thereby minimizing its destabilizing effects on the PEG-protein solution, which may otherwise promote protein precipitation. As a result, the target protein remains soluble, and impurities selectively precipitate, allowing for their removal by centrifugation. The method according to the invention thus reduces processing time by enabling rapid impurity precipitation without requiring extended incubation times.

The absolute difference between the pH of the first mixture and the pl of the target protein may be, for example, 0.0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0. According to one embodiment, the absolute difference between the pH of the first mixture and the pl of the target protein is at most 1. According to a preferred embodiment the absolute difference between the pH of the first mixture and the pl of the target protein is at most 0.5.

According to one embodiment, in step b), the PEG has an average molecular weight in the range of 3000 Da to 10000 Da. The PEG may have an average molecular weight of, for example, 3000 Da, 3350 Da, 4000 Da, 4600 Da, 6000 Da, 8000 Da, or 10000 Da. It has been observed that PEGs with an average molecular weight above 4000 Da tend to yield increasingly better results. Thus, it may be assumed that no sufficient results may be achieved with PEGs having an average molecular weight below 3000 Da. Accordingly, in a preferred embodiment, the PEG has an average molecular weight in the range of 4600 Da to 10000 Da. Particularly preferred, the PEG is PEG 8000.

According to one embodiment, in step b), the extraction solution comprises PEG and a buffer solution. The extraction solution may have a pH in the range of 5.0 to 9.0. For example, the extraction solution may have a pH of 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, or 9.0. In a preferred embodiment, the extraction solution has a pH in the range of 6.5 to 8.0. In a more preferred embodiment, the extraction solution has a pH in the range of 6.8 to 7.6. Particularly preferred, the buffer solution is a phosphate buffer, in particular the buffer solution is phosphate buffer saline (PBS). Thereby, the pH of the extraction solution can be adjusted with regards to the pl of the target protein. The buffer solution may further comprise, for example, buffering agents, protease inhibitors, salts, detergents, reducing agents, and stabilizers.

Buffering agents are known to the skilled person and include, for example, phosphates, Tris (tris(hydroxymethyl)aminomethane), HEPES (4-(2-hydroxyethyl)-1-piperazineethanesulfonic acid), MOPS (3-(N-morpholino)propanesulfonic acid), bicarbonate, citrate, and acetate. These agents typically help maintain the pH of a mixture within a desired range, which may be crucial for preserving the stability and activity of biomolecules.

Salts for use in buffers include, for example, sodium chloride, potassium chloride, magnesium chloride, calcium chloride, ammonium sulfate, and lithium chloride. These salts typically help maintain ionic strength, stabilize proteins, and mimic physiological conditions.

Detergents for use in buffers include, for example, non-ionic detergents such as Triton X-100, Tween-20, and Brij-35, zwitterionic detergents such as CHAPS (3-[(3-cholamidopropyl)dimethylammonio]-1-propanesulfonate), and ionic detergents such as SDS (sodium dodecyl sulfate) or deoxycholate. Detergents are typically used to solubilize membranes, denature proteins, or reduce protein aggregation in various biochemical applications.

Reducing agents for use in buffers include, for example, dithiothreitol (DTT), 2-mercaptoethanol (β-ME), TCEP (tris(2-carboxyethyl)phosphine), glutathione (GSH), and ascorbic acid. These agents are typically added to buffers to prevent oxidation of sensitive thiol groups in proteins, maintain a reducing environment, and stabilize the structure and activity of biomolecules.

Stabilizers for use in buffers include, for example, glycerol, sucrose, trehalose, and glucose, which typically protect biomolecules from denaturation and maintain structural integrity.

According to one embodiment, in step b), the concentration of PEG in the first mixture is in the range of 5 wt.% to 20 wt.%. Studies indicate that PEG concentrations below 5 wt.% in the first mixture may not be sufficient to achieve adequate protein precipitation. On the other hand, PEG concentrations exceeding 20 wt.% may lead to precipitation of not only non-target proteins but also the target protein itself. Additionally, the use of PEG concentrations above 20 wt.% may pose challenges for subsequent purification steps. The concentration of PEG in the first mixture may be, for example, 5 wt.%, 6 wt.%, 7 wt.%, 8 wt.%, 9 wt.%, 10 wt.%, 11 wt.%, 12 wt.%, 13 wt.%, 14 wt.%, 15 wt.%, 16 wt.%, 17 wt.%, 18 wt.%, 19 wt.%, or 20 wt.%. In a preferred embodiment, the concentration of PEG in the first mixture is in the range of 8 wt.% to 16 wt.%. Particularly favourable results have been observed with a PEG concentration of 12 wt.%. Accordingly, particularly preferred, the concentration of PEG in the first mixture is in the range of 8 wt.% to 16 wt.%.

Contacting the target protein with the extraction mixture may comprise lysing the biological sample. According to one embodiment, in step b), the biological sample is lysed by subjecting the biological sample to a lysis step. In a preferred embodiment, the lysis step comprises mechanical lysis of the biological sample. In one embodiment the lysis step comprises adding a defoamer.

The first mixture may be stirred at a temperature of between 5 and 25 °C. For example, the first mixture may be stirred at a temperature of 5°C, 7.5°C, 10°C, 12.5°C, 15°C, 17.5°C, 20°C, 22.5°C, or 25°C.

The first mixture may be stirred for a duration at most 8 h. For example, the first mixture may be stirred for a duration of 0.5 h, 1.0 h, 1.5 h, 2.0 h, 2.5 h, 3.0 h, 3.5 h, 4.0 h, 4.5 h, 5.0 h, 5.5 h, 6.0 h, 6.5 h, 7.0 h, 7.5 h, or 8.0 h.

According to one embodiment, in step b), the first mixture is stirred at a temperature of 15 to 25 °C for a duration of at most 2 h. In a preferred embodiment, the first mixture is stirred at a temperature of 15 to 25 °C for a duration of at most 1 h. Particularly preferred, the first mixture is stirred at a temperature of 15 to 25 °C for a duration of 20 to 40 min.

According to one embodiment, in step c), the suspension is centrifuged at 1000 × g to 8000 g. The suspension may be centrifuged, for example at 1000 × g, 1500 × g, 2000 × g, 2500 × g, 3000 × g, 3500 × g, 4000 × g, 4500 × g, 5000 × g, 5500 × g, 6000 × g, 6500 × g, 7000 × g, 7500 × g, or 8000 × g. According to a preferred embodiment, the suspension is centrifuged at 3000 × g to 5000 × g, Particularly preferred, the suspension is centrifuged at 3500 g to 4500 g.

The suspension may be centrifuged at a temperature of between 5 and 25 °C. For example, the first mixture may be stirred at a temperature of 5°C, 7.5°C, 10°C, 12.5°C, 15°C, 17.5°C, 20°C, 22.5°C, or 25°C.

The suspension may be centrifuged for a duration at most 1 h. For example, the suspension may be centrifuged for a duration of 5 min, 10 min, 15 min, 20 min, 30 min, 40 min, 50 min, or 60 min.

According to one embodiment, in step c), the suspension is centrifuged at a temperature of 15 to 25 °C for a duration of at most 1 h. According to a preferred embodiment, the suspension is centrifuged at a temperature of 15 to 25 °C for a duration of at most 30 min. Particularly preferred, the suspension is centrifuged at a temperature of 15 to 25 °C for a duration of 10 to 20 min.

In addition to containing precipitated proteins, the pellet formed by centrifugation in step c) may also contain PEG and impurities, such as cell debris. According to step d) the pellet is separated from the supernatant comprising the target protein Separating the pellet from the supernatant thus increases the purity of the target protein. Optionally, in step d), after separating the pellet from the supernatant comprising the target protein, supernatant is filtered. Thereby, particles still suspended in the supernatant may be removed, further increasing the purity of the target protein.

According to one embodiment, the target protein contains a His-Tag. According to one embodiment, the method further comprises a step e) contacting the supernatant comprising the target protein with a binding buffer and a composition of IM-MNP according to the second aspect under first conditions under which the target protein binds to the IM-MNP, thereby forming a second mixture.

Imidazole in the binding buffer serves to modulate the strength of protein binding by competing with histidine residues for coordination sites on the divalent transition metal cations of the IM-MNPs, thus influencing the selectivity and specificity of the binding process. According to one embodiment, the binding buffer has a concentration of imidazole in the range of 5 to 50 mM. For example, the concentration of imidazole in the binding buffer may be, for example, 5 mM, 10 mM, 15 mM, 20 mM, 25 mM, 30 mM, 35 mM, 40 mM, 45 mM, or 50 mM. In a preferred embodiment, the binding buffer has a concentration of imidazole in the range of 15 to 25 mM. Thereby, selective binding of the target protein to the IM-MNPs while reducing non-specific interactions is ensured.

According to one embodiment, the binding buffer has a pH in the range of 6.0 to 10. For example, the binding buffer may have a pH of 6.0, 6.1, 6.2, 6.3, 6.4, 6.5, 6.6, 6..07, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0. In a preferred embodiment, the buffer has a pH in the range of 7.0 to 9.0.

The binding buffer may further comprise, for example, buffering agents, protease inhibitors, salts, detergents, reducing agents, and stabilizers. Preferably, the binding buffer further comprises Tris-buffered saline (TBS).

According to one embodiment, the method further comprises a step f) separating the IM-MNP from the second mixture. According to a preferred embodiment, the IM-MNP is removed from the second mixture by applying a magnetic field. The magnetic field may be applied as described above.

According to one embodiment, the method further comprises the step of:
g) washing the IM-MNP separated in step f) by contacting the IM-MNP separated in step f) with the binding buffer, thereby forming a third mixture; and separating the IM-MNP from the third mixture.

According to a preferred embodiment, the IM-MNP are separated from the third mixture by applying a magnetic field.

According to one embodiment, step g) is repeated. According to a preferred embodiment, step g) is repeated at least two times. Particularly preferred, step g) is repeated with decreasing volumes of binding buffer.

According to one embodiment the method further comprises the step h) contacting the IM-MNP separated in step f) or step g) with an elution buffer under second conditions under which the target protein is eluted from the IM-MNP, forming a fourth mixture.

According to one embodiment, the elution buffer has a concentration of imidazole in the range of 200 mM to 800 mM. For example, the concentration of imidazole in the elution buffer may be, for example, 200 mM, 250 mM, 300 mM, 350 mM, 400 mM, 450 mM, 500 mM, 550 mM, 600 mM, 650 mM, 700 mM, 750 mM, or 800 mM. According to a preferred embodiment the elution buffer has a concentration of imidazole in the range of 400 mM to 600 mM According to a more preferred embodiment the elution buffer has a concentration of imidazole in the range of 450 mM to 550 mM.

The elution buffer may further comprise, for example, buffering agents, protease inhibitors, salts, detergents, reducing agents, and stabilizers. Preferably, the elution buffer further comprises Tris-buffered saline (TBS).

According to one embodiment, the method further comprises the step i) separating the IM-MNPs from the fourth mixture. According to a preferred embodiment, the IM-MNPs are separated from the fourth mixture by applying a magnetic field.

Particularly preferred, the target protein is eluted by adding the imidazole elution buffer to the IM-MNP and repeating the steps h) and i).

As a result, the purification method described above achieves improved separation efficiency, and better removal of non-specifically binding impurities while reducing the volumes of the buffers used for purification.

The target protein may be selected from enzymes, therapeutic proteins such as monoclonal antibodies, hormones, interferons, interleukins, clotting factors, or vaccines, receptors including G-protein coupled receptors, ion channels, and transporters, structural proteins such as actin and tubulin, binding proteins including antibodies, antibody fragments, and lectins, transcription factors, viral proteins comprising structural and non-structural proteins, tags and reporter proteins such as green fluorescent protein and fusion tags, cytokines and growth factors including epidermal growth factor and vascular endothelial growth factor, immunogenic proteins, metabolic and regulatory proteins including kinases and phosphatases, or toxins derived from bacterial or plant sources.

The target protein may be of mammalian origin, including but not limited to proteins derived from mice, rats, cows, or other mammals; of human origin, including human therapeutic proteins such as growth factors, cytokines, or clotting factors; of bacterial origin, such as bacterial enzymes, toxins, or other proteins expressed in bacterial systems; of yeast origin, including proteins expressed in yeast species such as *Saccharomyces cerevisiae* or *Pichia pastoris*; of plant origin, including plant-derived lectins, enzymes, or immunogenic proteins; of insect origin, including proteins expressed in insect cells or derived from baculovirus systems; of viral origin, including capsid proteins, envelope proteins, or viral enzymes; of fungal origin, such as fungal enzymes or proteins; of aquatic or marine origin, including proteins derived from fish, shellfish, or marine microorganisms; or synthetic or engineered proteins, including fusion proteins, de novo designed proteins, or other bioengineered constructs.

According to one embodiment, the target protein is selected from green fluorescent protein (GFP) and ovalbumin.

### EXAMPLES

### Example 1 - Synthesis of magnetic nanoparticles (MNPs)

FeCl₃ (3.25 g) and FeCl₂·4H₂O (2.00 g) were dissolved in 60.0 mL aqueous HCl solution (100 mM), degassed for 5 minutes and the resulting Fe-solution was flushed with N₂. 100 mL of aqueous NaOH solution (2M, degassed) were added to a 200 mL Schott bottle, degassed for 5 minutes and heated up to 80-85 °C. Subsequently, the prepared Fe-solution was added slowly dropwise under vigorous stirring to the NaOH solution at 80-85 °C. The formed black suspension of Fe₃O₄ (FeO · Fe₂O₃) was stirred for 10 more minutes at 80 - 85° C. 7.80 mL of an NH₄OH solution (32 %) was added and the suspension was stirred further for 45 minutes at 80 - 85° C. Afterwards the suspension was allowed to cool down to RT and transferred into a wide 1 L beaker. The black precipitate was magnetically pelleted and the supernatant discarded with a 10 mL pipet. The pellet was washed with 100 mL of water and then magnetically pelleted again. The above-mentioned washing step was repeated three times with water and eventually once with EtOH and all visible supernatant removed with a pipette. The resulting slurry (about 22 mL particle suspension) comprising the synthesized magnetic nanoparticles (MNPs) was transferred to a 250 mL Schott bottle and used directly further for the coating step.

### Example 2 - Coating of MNPs

The general scheme for the coating process is shown in Fig. 1.

100 mL of an (3-Aminopropyl)triethoxysilane (APTES) solution (10% v/v APTES in a solvent mixture of 99% v/v ethanol and 1% v/v water) were added to 22 mL of MNPs freshly synthesized according to the method of Example 1 and the suspension was degassed. Subsequently, the bottle was flushed with N₂ and kept closed for all of the reaction times to reduce the precipitation of iron oxide. The suspension was stirred for 1 hour at room temperature. The aminosilane-coated MNPs were separated from the coating mixture using a magnet and washed three times with ethanol, followed by a single wash with acetonitrile. Then, the MNPs were resuspended in 100 mL acetonitrile and ethylenediaminetetraacetic dianhydride (EDTAD, 1.00 g) was added to the suspension. The suspension was stirred for 1 hour at room temperature. The MNPs were separated from the reaction mixture using a magnet, resuspended in 100 mL acetonitrile and EDTAD (1.00 g) was added. The suspension was stirred for 1 hour at room temperature. Afterwards, the formed chelating aminosilane-coated MNPs were separated from the reaction mixture using a magnet, washed three times with acetonitrile (99.9 %, HPLC-Prep grade) and three times with water by resuspending the MNPs in 50 mL of solvent, mixing, magnetically pelleting the MNPs and removing the supernatant. The washed chelating aminosilane-coated MNPs were incubated with 100 mL of an aqueous NiSO₄·4H₂O solution (160 mM) for 1 hour at room temperature. Subsequently, the MNPs were washed four times with water by resuspending the MNPs in 100 mL water, mixing, magnetically pelleting the MNPs and removing the supernatant. The washed MNPs were then transferred to a 50.0 mL tube and magnetically pelleted until a clear supernatant was formed which was removed subsequently. The obtained slurry (20.0 mL) was diluted by adding 7.00 mL of water and mixed thoroughly. Thereby, 27.0 mL of immobilized metal-functionalized magnetic nanoparticles (IM-MNPs) were obtained.

### Example 3 - Protein Purification using reverse PEG precipitation

Frozen leaves (40.0 g) were resuspended in 300 mL of PEG extraction buffer (phosphate-buffered saline (PBS), pH 6.50, 12 wt.% PEG 8000). Subsequently, the plant tissue was lysed mechanically using a blender (BOSCH MMBH6P6BDE VitaBoost Hochleistungsmixer, 1600 Watt, 2 Liter) with speed of 30.000 rpm for 30 to 60 seconds until a tissue-free suspension formed. One droplet (about 200 µL) of a defoamer (neodisher^{®} Reinigungszusatz Entschäumer S; Dr. Weigert) was added and the suspension was further mixed slowly until foam and bubbles completely disappeared. The suspension was transferred to a 500 mL Schott bottle and stirred vigorously for 30 minutes at room temperature. Afterwards, the suspension was transferred to a 1 L centrifugation bottle and centrifuged at 4,000 × g for 15 minutes at room temperature. The supernatant comprising 6x His-tagged GFP was transferred to a 500 mL Schott bottle, and the pellet comprising cell debris and precipitated proteins was discarded. The supernatant was filtered through gauze, followed by vacuum microfiltration using a 0.45 µm bottle-top filter, yielding a clear filtrate. A total of 250 mL of clear filtrate comprising the target protein was obtained.

### Example 4- Protein Purification using IM-MNPs

250 mL of the clear filtrate of Example 3 comprising a His-tagged target protein were diluted with 250 mL of binding buffer (Tris-buffered saline (TBS), pH 7.3, 20 mM imidazole). The pH value of the resulting mixture was adjusted to pH 7.4. 1 mL of the IM-MNPs of Example 2 was added to the mixture and the mixture was stirred for 30 minutes at room temperature.

Subsequently, the IM-MNPs were separated from the mixture by pelleting the IM-MNPs magnetically and discarding the supernatant. Then, the IM-MNPs were washed multiple times with decreasing volumes of binding buffer. Therefore, the pellet comprising the IM-MNPs was resuspended in 30 mL of binding buffer, transferred to a 50 mL tube, the IM-MNPs were pelleted magnetically and the supernatant was discarded. The pellet comprising the IM-MNPs was then resuspended in 10 mL of binding buffer, transferred to a 15 mL tube, the IM-MNPs were pelleted magnetically and the supernatant was discarded. In a final washing step, the pellet comprising the IM-MNPs was resuspended in 2 mL of binding buffer, the IM-MNPs were pelleted magnetically and the supernatant was discarded.

To elute the target protein bound to the IM-MNPs from the IM-MNPs, the pellet comprising the IM-MNPs was resuspended in 1 mL elution buffer (TBS, pH 7.3, 500 mM imidazole) and the resuspension was vortexed for 20 seconds and incubated for 1 minute at room temperature. Subsequently, the IM-MNPs were pelleted magnetically and the supernatant comprising the eluted target protein was transferred to new 2 mL tubes. Finally, the supernatant was pelleted again magnetically to remove any residual IM-MNPs and the supernatant comprising the target protein was transferred to a new 1.5 mL tube yielding the purified target protein.

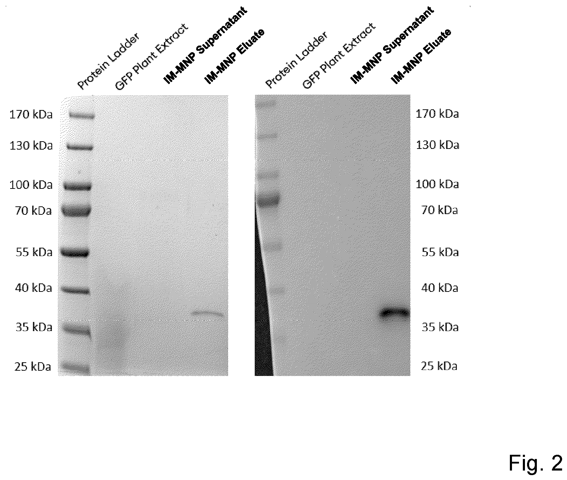

The purification was analyzed by SDS PAGE and Western-Blot-Analysis. The result is shown in Fig. 2. In the SDS gel in the line extract a smear instead of protein bands is found due to the high PEG content. In the lane of the supernatant after the bead extraction no bands are found, because the extract and the supernatant are highly diluted solutions. The lane of the eluate shows one single band at the correct size for the target protein, GFP. This result is confirmed in the Western Blot with an antibody specific for GFP. Accordingly, the purification results in highly pure target protein.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### REFERENCES

Oberacker P, Stepper P, Bond DM, Höhn S, Focken J, et al. (2019) Bio-On-Magnetic-Beads (BOMB): Open platform for high-throughput nucleic acid extraction and manipulation. PLOS Biology 17(1): e3000107. Doi: https://doi.org/10.1371/journal.pbio.3000107
Atha, D.H.; Ingham, K.C. Mechanism of precipitation of proteins by polyethylene glycols. Analysis in terms of excluded volume. Journal of Biological Chemistry 1981, 256, 12108-12117, doi: https://www.doi.org/10.1016/S0021-9258(18)43240-1.
Duong-Ly, K.C.; Gabelli, S.B. Salting out of proteins using ammonium sulfate precipitation. in Methods in Enzymology; Elsevier: 2014; Volume 541, pp. 85-94.
Arakawa, T.; Timasheff, S.N. Mechanism of Protein Salting in and Salting out by Divalent-Cation Salts - Balance between Hydration and Salt Bind

## Claims

1. An immobilized metal-functionalized magnetic nanoparticle (IM-MNP) comprising a ferrite core and a coating comprising an aminosilane moiety, a chelating moiety and a divalent transition metal cation.

2. The IM-MNP according to claim 1, wherein the aminosilane moiety is selected from 3-Aminopropylsilane, 4-Aminobutylsilane, N-(2-Aminoethyl)-3-aminopropylsilane, N-6-Aminohexylaminomethylsilan, 3-[2-(2-Aminoethylamino)ethylamino]propylsilane, preferably the aminosilane moiety is 3-Aminopropylsilane.

3. The IM-MNP according to claim 1 or 2, wherein the chelating moiety is selected from ethylenediaminetetraacetic acid (EDTA), Nitrilotriacetic Acid (NTA), , Ethylenediamine-N,N'-diacetic Acid (EDDA), Diethylenetriaminepentaacetic Acid (DTPA), Cyclohexane Diamine Tetraacetic Acid (CDTA), preferably the chelating moiety is EDTA.

4. The IM-MNP according to any one of claims 1 to 3, wherein the aminosilane moiety and the chelating moiety are connected by an amide group.

5. The IM-MNP according to any one of claims 1 to 4, wherein the divalent transition metal cation is selected from Ni²⁺, Co²⁺, Cu²⁺ and Zn²⁺, preferably the divalent transition metal cation is Ni²⁺.

6. The IM-MNP according to any one of claims 1 to 5, wherein ferrite is selected from magnetite (Fe₃O₄), Cobalt Ferrite (CoFe₂O₄), Nickel Ferrite (NiFe₂O₄), Manganese Ferrite (MnFe₂O₄), Lithium Ferrite (LiFesOs), Barium Ferrite (BaFe₁₂O₁₉), and Strontium Ferrite (SrFe₁₂O₁₉), preferably the ferrite is F₃O₄.

7. A composition of IM-MNPs, wherein the IM-MNPs are defined according to any one of claims 1 to 6, and the cores of the IM-MNPs have an average diameter of in the range of 1 to 40 nm, preferably 5 to 20 nm, more preferable in the 10 to 15 nm.

8. The composition of IM-MNPs according to claim 7, wherein the concentration of the divalent transition metal cation is at least 400 µg/ml, preferably at least 600 µg/ml, more preferably at least 700 µg/ml, most preferably at least 800 µg/ml.

9. A method of manufacturing IM-MNPs, comprising the steps of
a) providing ferrite particles, wherein the ferrite is preferably magnetite;
b) adding an aminosilane to the ferrite particles and mixing, thereby forming aminosilane-coated ferrite particles;
c) separating a pellet formed by the aminosilane-coated ferrite particles from the reaction mixture and washing the pellet,
d) adding a chelating agent anhydride to the pellet and mixing, thereby forming chelating aminosilane-coated ferrite particles;
e) separating a pellet formed by the chelating aminosilane-coated ferrite particles from the reaction mixture and washing the pellet; and
f) incubating the chelating aminosilane-coated ferrite particles with a divalent transition metal cation; removing a pellet formed by the divalent transition metal cation coated ferrite particle from the reaction mixture and washing the pellet.

10. The method according to claim 9, wherein in step b)
• the aminosilane is selected from (3-Aminopropyl)triethoxysilane (APTES), (3-Aminopropyl)trimethoxysilane (APTMS), (3-Aminopropyl)methyldiethoxysilane (APDMES), N-(2-Aminoethyl)-3-aminopropyltrimethoxysilane (AEAPTMS), (3-Aminopropyl)triisopropoxysilane (APTIPES), and (3-Aminopropyl)triacetoxysilane (APTAS) 3-aminopropyltriethoxysilane (APS), 4-Aminobutyltriethoxysilane, N-(2-aminoethyl)-3-aminopropyltrimethoxysilane (EDA), and (3-trimethoxysilylpropyl) diethylenetriamine (DETA), N-(6-Aminohexyl)aminomethyltriethoxysilane, preferably the aminosilane is APTES, more preferably APTES is added as an ethanolic solution; and/or
• the weight ratio of ferrite particles to the aminosilane is in the range of 2:1 to 10:1, preferably in the range of 3:1 to 5:1; and/or
• the mixture is stirred at a temperature of 15 to 25 °C for a duration of at most 8 h, preferably at most 4 h, more preferably 30 min to 2 h.

11. The method according to claim 9 or 10, wherein in step d)
• the pellet is resuspended in acetonitrile, preferably with a volume of 3 to 5 mL per mL particles, and/or
• the chelating agent anhydride is selected from EDTA dianhydride, NTA anhydride, EDDA anhydride, DTPA anhydride, CDTA anhydride, preferably the chelating agent anhydride is EDTA dianhydride; and/or
• the chelating agent anhydride is added to the particles in a ratio of in the range of 16 to 96 mg per mL particles, preferably in the range of 32 to 48 mg per mL particles; and/or
• the mixture is stirred at a temperature of 15 to 25 °C for a duration of at most 8 h, preferably at most 4 h, more preferably 30 min to 2 h; and/or
• optionally the pellet is removed and EDTA anhydride in acetonitrile is added to the pellet, wherein the ratio of EDTA anhydride to particles is the same as in the first addition and the mixing conditions are the same;

12. Use of a composition of IM-MNPs according to claim 7 or 8 for purifying a target protein from a mixture comprising the target protein, wherein the target protein comprises a His-tag.

13. A method of purifying a target protein from a biological sample comprising the steps of:
a) providing the biological sample comprising the target protein, preferably wherein the biological sample is selected from bacterial cells, yeast cells, mammalian cells and plant tissues; or lysates thereof, more preferably wherein the biological sample is a plant tissue; and/or
b) contacting the target protein with an extraction solution comprising polyethylene glycol (PEG), thereby forming a first mixture, wherein the absolute difference between the pH of the first mixture and the pl of the target protein is at most 2.0, preferably 1.0, more preferably 0.5, to cause protein precipitation, thereby forming a suspension; and/or
c) centrifuging the suspension, thereby forming a pellet comprising precipitated proteins and a supernatant comprising the target protein; and/or
d) separating the pellet from the supernatant comprising the target protein and optionally filtering the supernatant.

14. The method according to claim 13, wherein the target protein contains a His-Tag and wherein the method further comprises the steps of:
e) contacting the supernatant comprising the target protein with a binding buffer and a composition of IM-MNP according to any of claims 6 or 7 under first conditions under which the target protein binds to the IM-MNP, thereby forming a second mixture;
f) separating the IM-MNP from the second mixture, preferably by applying a magnetic field;

15. The method according to claim 13 or 14, wherein in step b):
• the PEG has an average molecular weight in the range of 3000 Da to 10000 Da, more preferably the PEG has an average molecular weight in the range of 4600 Da to 10000 Da, most preferably the PEG is PEG 8000; and/or
• the extraction solution comprises PEG and a buffer solution, preferably the extraction solution has a pH value in the range of pH 6.5 to pH 8.0, more preferably pH 6.8 to pH 7.6, most preferably the buffer solution is a phosphate buffer, in particular the buffer solution is phosphate buffer saline (PBS); and/or
• the concentration of PEG in the first mixture is in the range of 5 wt.% to 20 wt.%, more preferably in the range of 8 wt.% to 16 wt.%, most preferably in the range of 11 wt.% to 13 wt.%; and/or
• the biological sample is lysed by subjecting the biological sample to a lysis step, preferably wherein the lysis step comprises mechanical lysis of the biological sample; wherein optionally the lysis step comprises adding a defoamer; and/or
• the first mixture is stirred at a temperature of 15 to 25 °C for a duration of at most 2 h, preferably at most 1 h, more preferably for 20 to 40 min.
